# EUROPÄISCHE PATENTANMELDUNG

(11) **EP 4 122 697 A1**
(43) Veröffentlichungstag der Anmeldung: **25.01.2023**
(21) Anmeldenummer: 22170423.2
(22) Anmeldetag: 28.04.2022
(51) Int. Cl.: B32B 7/022, B32B 7/12, B32B 23/04, B32B 27/08, B32B 27/28, B32B 27/32, B32B 27/36, B32B 27/34, B32B 27/30, G09F 3/00

(54) **VERBUNDFOLIE ZUR HERSTELLUNG EINES ETIKETTS**

(71) Anmelder: Hueck Folien Gesellschaft m.b.H., 4342 Baumgartenberg (AT)
(72) Erfinder: AIGNER, Georg, 4482 Ennsdorf (AT); ORTNER, Joachim, 4331 Naarn (AT); RICKER, Waltraud, 3321 Ardagger Markt (AT)
(74) Vertreter: Burger, Hannes

(57) **Zusammenfassung**

Die Erfindung betrifft Verbundfolie (1) zur Herstellung eines Etiketts und ein aus der Verbundfolie hergestelltes Etikett, wobei die Verbundfolie (1) eine erste Folie (2) aus einem Kunststoffmaterial aufweist, wobei die Verbundfolie eine zweite mit der ersten Folie (2) verbundene Folie (3) aufweist, und die erste und die zweite Folie entweder direkt miteinander verbunden sind, oder zwischen der ersten Folie (2) und der zweiten Folie (3) zumindest eine Zwischenschicht (4) angeordnet ist, dadurch gekennzeichnet, dass die zweite Folie (3) aus einem gleichen Kunststoffmaterial, wie die erste Folie (2) gefertigt ist.

## Beschreibung

Die Erfindung betrifft eine Verbundfolie zur Herstellung eines Etiketts, wobei die Verbundfolie eine erste Folie aus einem Kunststoffmaterial aufweist, wobei die Verbundfolie eine zweite mit der ersten Folie verbundene Folie aufweist, und die erste und die zweite Folie entweder direkt miteinander verbunden sind, oder zwischen der ersten Folie und der zweiten Folie zumindest eine Zwischenschicht angeordnet ist.

Weiters betrifft die Erfindung ein Etikett, insbesondere ein Klebetikett für Glasoberflächen, beispielsweise für Glasflaschen.

Herkömmlicherweise werden Etiketten aus Verbundfolien hergestellt, die aus Folien unterschiedlicher Materialien bestehen. Dies führt unter anderem bei einem Recycling der Etiketten zu Problemen, da aufgrund der heterogenen Materialzusammensetzungen ein sortenreines Trennen nicht bzw. nur mit einem sehr großen Aufwand möglich ist.

Bei Verwendung von beschichteten Monofolien, beispielsweise metallisierten Folien, zur Herstellung von Etiketten kann es bei einem Abwaschen der Etiketten, welches meist mit einer heißen verdünnten Natronlauge erfolgt, welche auch eine Metallschicht der Folie angreifen kann, zu einem teilweisen Auflösen der Beschichtung, beispielsweise der Metallschicht, kommen, wodurch es aufgrund der zwischen Beschichtung und Körper, auf dem das Etikett angebracht ist, z.B. eine Glasflasche, üblicherweise vorhandenen Klebestoffschicht zu Rückständen von Klebestoff auf dem Körper kommen kann.

Es ist daher eine Aufgabe der Erfindung, die oben genannten Nachteile des Stands der Technik zu überwinden und ein gut recycelbares Etikett zu schaffen, dass sich gleichzeitig gut und möglichst rückstandsfrei und möglichst in einem Stück von einem Körper, auf dem es angebracht ist, durch einen Waschvorgang ablösen lässt. Die Aufgabe der Erfindung besteht somit darin, sämtliche oben genannten Wirkungen Recycelbarkeit sowie ein rückstandsfreies Ablösen gleichzeitig zu realisieren.

Diese Aufgabe wird durch eine Verbundfolie der eingangs genannten Art erfindungsgemäß dadurch gelöst, dass die zweite Folie aus einem gleichen Kunststoffmaterial, wie die erste Folie gefertigt ist.

Durch die erfindungsgemäße Lösung lässt sich ein in Bezug auf die verwendeten Kunststofffolien sortenreiner Aufbau des Etiketts realisieren, wodurch ein Recyclen wesentlich erleichtert wird. Aufgrund der stofflich gleichartigen Zusammensetzung der Folien wird auch das Ablöseverhalten des Etiketts deutlich verbessert.

Es versteht sich von selbst, dass für den Fall, dass der Folienverbund aus mehr als zwei Kunststofffolien besteht, vorteilhafterweise alle Folien aus dem gleichen Kunststoffmaterial gefertigt sind. An dieser Stelle sei auch darauf hingewiesen, dass unter dem Begriff "Folie" in dem vorliegenden Zusammenhang nur eine unbeschichtete Kunststofffolie verstanden wird. Selbstverständlich kann auf die unbeschichtete Kunststofffolie, also eine Folie im Sinne der gegenständlichen Erfindung, eine Beschichtung aufgebracht werden, beispielsweise durch Aufdampfen, Aufdrucken, Aufstreichen, Besprühen etc. Eine derartige auf die Folie aufgebrachte Beschichtung wird jedoch nicht als Folie oder als Teil der Folie betrachtet, sondern stellt lediglich eine auf der Folie befindliche bzw. auf diese aufgebrachte Schicht dar.

Als besonders vorteilhaft hat sich eine Ausführungsform der Erfindung herausgestellt, bei welcher die Folien, insbesondere unter thermischen Einfluss, unterschiedliche Schrumpfeigenschaften aufweisen. So können die Folien bei gleichen Prozesstemperaturen unterschiedlich stark schrumpfen. Durch die unterschiedlichen Schrumpfeigenschaften wird ein Ablösen des Etiketts von einem Körper deutlich verbessert. Unterschiedliche Schrumpfeigenschaften lassen sich beispielsweise durch unterschiedliche Schichtdicken der verwendeten Folien realisieren.

Als besonders vorteilhaft hat sich herausgestellt, dass das Kunststoffmaterial der ersten Folie und der zweite Folie zumindest eines der Materialien aus der Gruppe Polyimid (PI), Polypropylen (PP), monoaxial orientiertes Polypropylen (MOPP), biaxial orientiertes Polypropylen (BOPP), Polyethylen (PE), monoaxial orientiertes Polyethylen (MDOPE), biaxial orientiertes Polyethylen (BDOPE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

Besonders bevorzugt ist das verwendete Kunststoffmaterial der Folien nicht nur recycelbar oder aus recyceltem Material hergestellt, sondern auch biologisch und/oder marin abbaubar und/oder aus nachwachsenden Rohstoffen hergestellt.

Um eine große optische Gestaltungsvielfalt zu gewährleisten und auch eine hohe Qualität, insbesondere optische Qualität, eines aus den Etiketten gewonnenen Recyclats zu gewährleisten kann es von Vorteil sein, dass die erste Folie und die zweite Folie jeweils lichtdurchlässig ausgebildet sind, wobei ein Transmissionsgrad jeder der Folien vorzugsweise 30% - 99% beträgt.

Um den Materialbedarf bei gleichzeitiger Gewährleistung einer sehr hohen Robustheit gegen Beschädigungen und einer guten Verarbeitbarkeit sowie sehr guter Abzieheigenschaften zu optimieren, kann es vorgesehen sein, dass die erste Folie und die zweite Folie von gleicher oder unterschiedlicher Dicke sind, wobei die erste Folie und die zweite Folie je eine Dicke zwischen 5 µm - 150 µm aufweisen.

Insbesondere eine Dekorschicht, beispielsweise eine metallische bzw. eine einen metallischen Eindruck erzeugende Beschichtung lässt sich optimal dadurch vor Beschädigungen bei einem Ablösen bzw. Abwaschen der Folie schützen, dass zwischen der ersten Folie und der zweiten Folie zumindest eine Schicht, insbesondere eine Dekorschicht, beispielsweise aus einem metallischen Material, insbesondere aus einem Metall, und/oder einem einen metallischen Eindruck erzeugenden Material und/oder einem metallisch reflektierendem Material angeordnet ist. Bei der metallischen Schicht kann es sich beispielsweise um eine Schicht aus Metall, beispielsweise aus Aluminium, Kupfer, Silber, Gold, etc. handeln. Die metallische Schicht kann beispielsweise durch Aufsprühen, Aufdampfen, beispielsweise mittels eines PVD-Verfahrens, auf eine der Folien aufgebracht sein. Alternativ oder zusätzlich kann auch eine Schicht aus einem einen metallischen Eindruck erzeugenden Material und/oder eine metallische Reflexion erzeugenden Material, beispielsweise einer Metalleffektfarbe, insbesondere eine Metallpigmente enthaltende Druckfarbe oder eine Metallimitationsfarbe auf eine der Folien oder beide Folien aufgebracht werden, beispielsweise mittels Aufsprühen, Aufstreichen, mittels eines Druckverfahrens usw. Nach dem Beschichten einer der Folien oder beider Folien können die Folien so zusammengefügt werden, dass die Beschichtung bzw. die Beschichtungen zwischen den beiden Folien zu liegen kommt. Mit dieser Variante der Erfindung wird ein sehr guter Schutz der Beschichtung erzielt und beim Ablösen des Etiketts von einem Körper mittels beispielsweiser heißer verdünnter Natronlauge werden Klebstoffrückstände, wie sie üblicherweise bei einem (teilweisen) Zerstören der metallischen Beschichtung entstehen können, effizient vermieden.

Zum Verbinden der Folien, kann zwischen der ersten Folie und der zweiten Folie zumindest eine Klebstoffschicht angeordnet sein. Durch die Klebstoffschicht wird der Folienverbund zusammengehalten. Wenn die Klebstoffschicht die einzige Schicht zwischen den beiden Folien ist, werden die beiden unbeschichteten Folien ohne weitere Zwischenschicht durch die Klebstoffschicht miteinander verbunden. Wenn eine oder beide der Folien eine Beschichtung aufweist, dann kann die Klebstoffschicht auf die Beschichtung der Folie bzw. die Beschichtungen der Folien aufgetragen werden, um die beschichtete Folie mit der unbeschichteten Folie oder der anderen beschichteten Folie zu verbinden.

Gemäß einer vorteilhaften Weiterbildung der Erfindung kann es vorgesehen sein, dass die erste Folie auf einer der zweiten Folie abgewandten Seite zumindest eine Bedruckung, insbesondere eine zumindest ein Zeichen, insbesondere ein alphanumerisches Zeichen, und/oder zumindest ein Muster und/oder zumindest ein Bild und/oder zumindest ein Logo, trägt. Durch diese Variante der Erfindung lassen sich beispielsweise für den Benutzer relevante Informationen auf dem Etikett darstellen.

Gemäß einer vorteilhaften Weiterbildung der Erfindung, kann es vorgesehen sein, dass die Bedruckung direkt auf die erste Folie aufgebracht ist, oder dass zwischen der ersten Folie und der Bedruckung zumindest eine Zwischenschicht, insbesondere eine Grundierungsschicht für die Bedruckung, angeordnet ist. Die Anordnung einer Grundierung auf der Folie hat den Vorteil, dass der Untergrund der Bedruckung optimal auf die Bedruckung abgestimmt werden kann. Die Grundierung kann beispielweise eine weiße, eine farbige, eine farbig transparente, eine farblos transparente Grundierung etc. sein. Ein direktes Bedrucken der Folie kann beispielsweise auch dann von Vorteil sein, wenn eine gute Durchsicht durch die Bedruckung oder durch nichtbedruckte Bereiche auf eine zwischen der ersten und der zweiten Folie angeordnete Beschichtung, beispielsweise die Schicht aus einem metallischen Material, insbesondere aus einem Metall, und/oder einem einen metallischen Eindruck erzeugenden Material und/oder einem metallisch reflektierendem Material, gewünscht ist. Weiters kann es auch möglich sein, die zweite Folie beispielsweise auf einer der ersten Folie abgewandten und einer Klebstoffschicht zugewandten Seite zu bedrucken. Alternativ kann die zweite Folie auch auf einer der ersten Folie zugewandten Seite, die innerhalb des Folienverbundes liegt, bedruckt sein.

Vorteilhafterweise weist die zweite Folie an einer der ersten Folie abgewandten Seite eine Klebstoffschicht, insbesondere aus einem wasserlöslichen Klebstoff, auf. Beispielsweise kann die Klebstoffschicht direkt und ohne Zwischenschicht(en) auf die zweite Folie aufgebracht, um ein gutes und rückstandfreies Ablösen des Etiketts von dem Körper, auf dem das Etikett aufgebracht wird, zu gewährleisten.

Die oben genannte Aufgabe lässt sich auch mit einem Etikett der eingangs genannten Art erfindungsgemäß dadurch lösen, dass es aus einer Verbundfolie nach einem der Ansprüche 1 bis 9 gebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: einen Aufbau einer ersten Variante einer erfindungsgemäßen Verbundfolie bzw. eines erfindungsgemäßen Etiketts;
- Fig. 2: einen Aufbau einer zweiten Variante einer erfindungsgemäßen Verbundfolie bzw. eines erfindungsgemäßen Etiketts.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

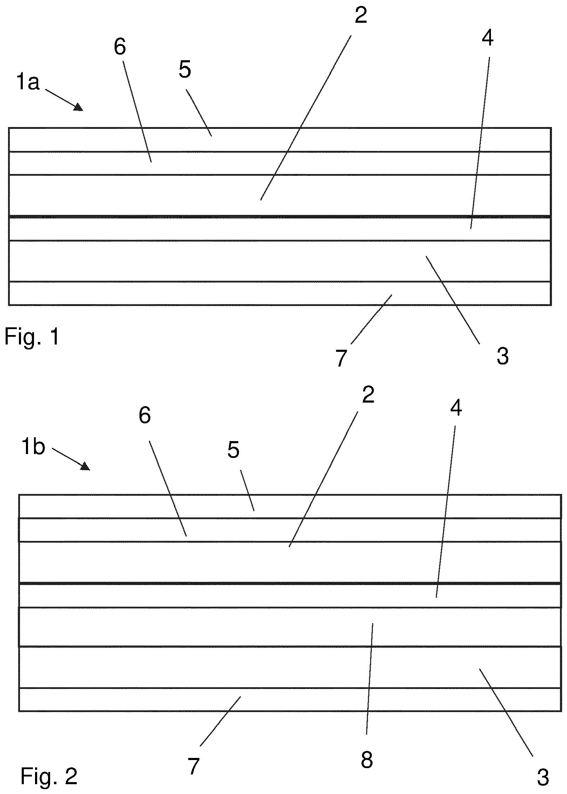

Fig. 1 und 2 zeigen jeweils eine erfindungsgemäße Verbundfolie la bzw. 1b zur Herstellung eines Etiketts bzw. ein aus der Verbundfolie 1a gefertigtes Etikett, insbesondere ein Klebeetikett. Im Folgenden wird aus Gründen der einfacheren Lesbarkeit in erster Linie auf die Verbundfolien 1a, 1b Bezug genommen, wobei natürlich sämtliche Ausführungen auch für ein Etikett gleichermaßen gelten, da das Etikett den gleichen Aufbau wie die Verbundfolien 1a, 1b aufweist. Zur Herstellung von Etiketten aus den Verbundfolie 1a, 1b können der Form und Größe der Etiketten entsprechende Stücke aus einer Bahn der Verbundfolien 1a, 1b beispielsweise durch Schneiden und/oder Stanzen herausgelöst bzw. abgetrennt werden. Diese herausgelösten, vereinzelten Stücke bilden dann die Etiketten.

Gemäß Fig. 1 weist die erfindungsgemäße Verbundfolie la eine erste Folie 2 aus einem Kunststoffmaterial sowie eine zweite mit der ersten Folie 2 verbundene Folie 3 auf. Die erste Folie 2 und die zweite Folie 3 können wie in Fig. 1 dargestellt direkt miteinander verbunden sein, beispielsweise durch Laminieren oder Heißkleben. Weiters kann zwischen der ersten Folie 2 und der zweiten Folie 3 zumindest eine Zwischenschicht angeordnet sein. In der dargestellten Variante ist eine zwischen den beiden Folien 2, 3 eine Klebstoffschicht 4 angeordnet, durch welche die Folien 2 und 3 miteinander verbunden sind.

Erfindungsgemäß ist die zweite Folie 3 aus dem gleichen Kunststoffmaterial, wie die erste Folie 2 gefertigt.

Das Kunststoffmaterial der ersten Folie 2 und der zweite Folie 3 kann zumindest eines der Materialien aus der Gruppe Polyimid (PI), Polypropylen (PP), monoaxial orientiertes Polypropylen (MOPP), biaxial orientiertes Polypropylen (BOPP), Polyethylen (PE), monoaxial orientiertes Polyethylen (MDOPE), biaxial orientiertes Polyethylen (BDOPE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybuty-lensuccinat (PBS), und Polybutylenadipat-terephthalat (PBAT) und/oder Mischungen und/oder Co-Polymere und/oder Verbundmaterialien dieser Materialien umfassen oder aus zumindest einem dieser Materialien hergestellt sein.

Die erste Folie 2 und die zweite Folie 3 können jeweils lichtdurchlässig ausgebildet sein, wobei ein Transmissionsgrad jeder der Folien 2, 3 vorzugsweise 30% - 99% beträgt.

Die erste Folie 2 und die zweite Folie 3 können von gleicher oder unterschiedlicher Dicke sein. Beispielsweise können die erste Folie 2 und die zweite Folie 3 je eine Dicke zwischen 10 µm - 80 µm aufweisen. Es hat sich herausgestellt, dass es in Bezug auf die Ablösbarkeit der Folie von Vorteil sein kann, wenn die zweite Folie 3 etwas dicker ausgeführt ist als die erste Folie 2. Gemäß einem besonders bevorzugten Ausführungsbeispiel kann die erste Folie 2 beispielsweise eine Dicke von ca. 20 µm und die zweite Folie 3 eine Dicke von ca. 30 µm aufweisen.

Die erste Folie 2 kann auf einer der zweiten Folie 3 abgewandten Seite eine Bedruckung 5, insbesondere eine zumindest ein Zeichen, insbesondere ein alphanumerisches Zeichen, und/oder zumindest ein Muster und/oder zumindest ein Bild und/oder zumindest ein Logo tragen zw. aufweisen. Die Bedruckung 5 kann mittels geeigneter Druckfarben und/oder Drucklacke hergestellt sein. Über der Bedruckung 5 kann als äußerste Schicht noch eine hier nicht dargestellte Schutzschicht aufgebracht sein, beispielsweise in Form eines Klarlacks.

Die Bedruckung 5 kann direkt auf die erste Folie 2 aufgebracht sein. Alternativ kann zwischen der ersten Folie 2 und der Bedruckung 5 zumindest eine Zwischenschicht 6, insbesondere eine Grundierungsschicht für die Bedruckung 5, angeordnet sein. Die Grundierungsschicht kann beispielsweise aus einem geeigneten Lack und/oder einer Haftvermittlungsschicht für die Druckfarbe bzw. den Drucklack der Beschichtung 5 gebildet sein.

Die zweite Folie 3 kann an einer der ersten Folie 2 abgewandten Seite eine Klebstoffschicht 7, insbesondere aus einem wasserlöslichen Klebstoff, aufweisen, um das aus der Verbundfolie 1a gebildete Etikett auf einer Oberfläche, insbesondere einer Glasoberfläche, beispielweise auf einer Glasflasche zu befestigen. Durch die Wasserlöslichkeit des Klebstoffes 7 lässt sich ein gutes Abwaschen des Etiketts von der Oberfläche gewährleisten.

Gemäß Fig. 2 kann bei dem Verbundaufbau 1b zwischen der ersten Folie 2 und der zweiten Folie 3 zumindest eine Schicht 8, insbesondere eine Dekorschicht, beispielsweise aus einem metallischen Material, insbesondere aus einem Metall, und/oder einem einen metallischen Eindruck erzeugenden Material und/oder einem metallisch reflektierendem Material angeordnet sein. Die Schicht 8 kann beispielsweise auf die Folie 3 aufgedampft werden. Auf die Schicht 8 wird dann die Klebstoffschicht 4 aufgebracht, um die Folien 2 und 3 zu verbinden. Durch die Anordnung der Schicht 8 zwischen den beiden Folien 2 und 3 ist die Schicht 8 gegen ein für ein Abwaschen des Etiketts von einer zur Wiederverwendung zu reinigenden Glasflasche verwendetes Lösemittel geschützt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1a, 1b: Verbundfolie
- 2: Folie
- 3: Folie
- 4: Klebstoffschicht
- 5: Bedruckung
- 6: Zwischenschicht
- 7: Klebstoffschicht
- 8: Schicht

## Patentansprüche

1. Verbundfolie (1a, 1b) zur Herstellung eines Etiketts, wobei die Verbundfolie (1a, 1b) eine erste Folie (2) aus einem Kunststoffmaterial aufweist, wobei die Verbundfolie eine zweite mit der ersten Folie (2) verbundene Folie (3) aufweist, und die erste und die zweite Folie entweder direkt miteinander verbunden sind, oder zwischen der ersten Folie (2) und der zweiten Folie (3) zumindest eine Zwischenschicht angeordnet ist, **dadurch gekennzeichnet, dass** die zweite Folie (3) aus einem gleichen Kunststoffmaterial wie die erste Folie (2) gefertigt ist.

2. Verbundfolie nach Anspruch 1, **dadurch gekennzeichnet, dass** die erste Folie (2) andere Schrumpfeigenschaften aufweist als die zweite Folie (3).

3. Verbundfolie nach Anspruch 1 oder 2, **dadurch gekennzeichnet, dass** das Kunststoffmaterial der ersten Folie (2) und der zweiten Folie (3) zumindest eines der Materialien aus der Gruppe Polyimid (PI), Polypropylen (PP), monoaxial orientiertes Polypropylen (MOPP), biaxial orientiertes Polypropylen (BOPP), Polyethylen (PE),monoaxial orientiertes Polyethylen (MDOPE), biaxial orientiertes Polyethylen (BDOPE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylchlorid (PVC) Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Lignin-basierte Kunststoffe, Polyhydroxyalkanoate (PHA), thermo-plastische Stärke (TPS), Polymilchsäure (PLA), Polycaprolacton (PCL), Polybutylensuccinat (PBS), und Polybutylenadipat-terephthalat (PBAT) und/oder Mischungen und/oder Co-Polymere und/oder Verbundmaterialien dieser Materialien umfasst oder aus zumindest einem dieser Materialien hergestellt ist.

4. Verbundfolie nach Anspruch 1 bis 3, **dadurch gekennzeichnet, dass** die erste Folie (2) und die zweite Folie (3) jeweils lichtdurchlässig ausgebildet sind, wobei ein Transmissionsgrad jeder der Folien (2, 3) vorzugsweise 30% - 99% beträgt.

5. Verbundfolie nach einem der Ansprüche 1 bis 4, **dadurch gekennzeichnet, dass** die erste Folie (2) und die zweite Folie (3) von gleicher oder unterschiedlicher Dicke sind, wobei die erste Folie (2) und die zweite Folie (3) je eine Dicke zwischen 10 µm - 80 µm aufweisen.

6. Verbundfolie nach einem der Ansprüche 1 bis 5, **dadurch gekennzeichnet, dass** zwischen der ersten Folie (2) und der zweiten Folie (3) zumindest eine Schicht (8), insbesondere eine Dekorschicht, beispielsweise aus einem metallischen Material, insbesondere aus einem Metall, und/oder einem einen metallischen Eindruck erzeugenden Material und/oder einem metallisch reflektierenden Material angeordnet ist.

7. Verbundfolie nach einem der Ansprüche 1 bis 6, **dadurch gekennzeichnet, dass** zwischen der ersten Folie (2) und der zweiten Folie (3) zumindest eine Klebstoffschicht (4) angeordnet ist.

8. Verbundfolie nach einem der Ansprüche 1 bis 7, **dadurch gekennzeichnet, dass** die erste Folie (2) auf einer der zweiten Folie (3) abgewandten Seite zumindest eine Bedruckung (5), insbesondere eine zumindest ein Zeichen, insbesondere ein alphanumerisches Zeichen, und/oder zumindest ein Muster und/oder zumindest ein Bild und/oder zumindest ein Logo, trägt.

9. Verbundfolie nach Anspruch 8, **dadurch gekennzeichnet, dass** die Bedruckung (5) direkt auf die erste Folie (2) aufgebracht ist, oder dass zwischen der ersten Folie (2) und der Bedruckung (5) zumindest eine Zwischenschicht (6), insbesondere eine Grundierungsschicht für die Bedruckung (5), angeordnet ist.

10. Verbundfolie nach einem der Ansprüche 1 bis 9, **dadurch gekennzeichnet, dass** die zweite Folie (3) an einer der ersten Folie (2) abgewandten Seite eine Klebstoffschicht (7), insbesondere aus einem wasserlöslichen Klebstoff, aufweist.

11. Etikett, insbesondere Klebetikett für Glasoberflächen, beispielsweise für Glasflaschen, **dadurch gekennzeichnet, dass** es aus einer Verbundfolie nach einem der Ansprüche 1 bis 10 gebildet ist.
